# EUROPEAN PATENT APPLICATION

(11) **EP 3 663 126 A1**
(43) Date of publication of application: **10.06.2020**
(21) Application number: 18210842.3
(22) Date of filing: 06.12.2018
(51) Int. Cl.: B60L 53/80, B60K 1/04, B60S 5/06, B66F 9/075, B60L 53/30, B60L 53/53

(54) **BATTERY STORAGE AND CHARGE SYSTEM**

(71) Applicant: Battswap, Inc., Lewes, Delaware 19958 (US)
(72) Inventor: JANKU, Radek, 160 00 PRAHA 6 (CZ)
(74) Representative: Plasseraud IP

(57) **Abstract**

A battery storage and charge system utilizing circulating conveyor having a plurality of battery docks each configured to receive and mechanically and electrically connect with a battery block. The docks are arranged above one another and conveyor circulates the battery docks vertically so as to pass a loading and unloading point located beneath the conveyor. Each dock is positioned to receive or deliver a battery block when passing the loading and unloading point.

## Description

### FIELD OF THE DISCLOSURE

The disclosure relates to battery storage and charge system for electric or hybrid vehicles battery exchange station.

### BACKGROUND OF THE DISCLOSURE

Electric vehicles require specific power management. When a battery that powers an electrical vehicle is discharged, it must be either recharged or replaced by a charged battery. The battery replacement provides a significant time advantage over a standard battery in vehicle recharge which can take up to several hours. Existing fast chargers can then lower the battery charging time required. However, as they utilize a high charging current their usage negatively impacts the battery lifetime and causes consequent economical loss as the battery performances and value prematurely deteriorates.

The battery replacement can be made available through a dedicated battery storage and exchange system or station that provides an available charged battery and a means to store and charge the discharged battery under optimal conditions. Such system typically employs a storage subsystem utilizing plurality of storage racks having shelfs equipped with connectors to provide a charging power to each of the batteries that are stored. It further utilizes a manipulator to grasp and move battery to and from the shelf and a battery conveyance mechanism for moving the battery from and to the racks. Another example is described for instance in US 5612606 A where the battery exchange system utilizes a dedicated lift mechanism to manipulate the batteries in a staging substation where the battery platforms are stored.

Such systems requires a significant complex battery handling bearing reliability issues and occupies a large space needed for the overall battery storage and exchange.

### SUMMARY OF THE DISCLOSURE

One objective of the present disclosure is to remedy at least part of these drawbacks. According to various aspects of the present disclosure, exemplary embodiment of a battery storage and charge system for battery blocks is described comprising a circulating conveyor having a plurality of battery docks, the conveyor being adapted to circulate the battery docks vertically so as to pass a loading and unloading point located beneath the conveyor, wherein each dock is configured to receive a battery block and to mechanically and electrically connect with a battery block, a guiding mechanism configured to guide each battery dock so that each dock is positioned in a predetermined way to receive or deliver a battery block when passing the loading and unloading point, a driving unit and a control unit configured to drive and control the circulating conveyor, at least one charging unit adapted to charge and communicate with the battery block when the block is installed in the battery dock.

In another embodiment a battery exchange station is described comprising the battery storage and charge system as described above the station further comprising an enclosed housing with at least one access opening.

Thanks to these dispositions, the foot print of the overall battery storage and charge system for battery blocks is small as the batteries are stored substantially vertically above each other within the circular conveyor. Additionally the need for complex battery manipulation to and from battery rack is eliminated via a guiding mechanism that guides movement of each battery within the conveyor to the predetermined position for loading and unloading of the battery, the position being the loading and unloading point for the battery located beneath the conveyor. Such battery storage and charge system can be advantageously utilized within a battery exchange station serving to provide a depleted battery for a recharged battery to an electrical vehicle. This is especially advantageous in a densely populated areas where the compactness of a battery exchange station is an important factor.

In various examples of the battery exchange system according to the present disclosure, one may possibly have recourse in addition to one and/or other of the following arrangements:
- the charging unit may be external to the battery docks and the system includes an electrical connection system between the charging unit and each of the docks.
- each battery dock of the plurality battery docks may have a downward opening and each battery dock may be configured to receive the battery block for electrical and mechanical connection by vertical fitting when such battery block is lifted in the loading and unloading point;
- the system may further comprise at least one rail and a service module mounted on the at least one rail, the service module may be controllably operable by the control unit to move on the at least one rail to the loading and unloading point beneath the conveyor so as to selectively receive a charged battery block from a battery dock at the conveyor or selectively place a depleted battery block to an empty battery dock at the conveyor;
- the service module may include a position sensor adapted to detect whether the battery block is properly positioned relative to the empty battery dock;
- the service module may include a first platform for supporting a charged battery block and a second platform for supporting a discharged battery block;
- the first platform and the second platform may each include a lift assembly for raising and lowering the platform;
- the lift assembly may comprise a scissor type lift;
- the circulating conveyor may have two vertically disposed endless chains having the battery docks located in between, wherein the battery docks are affixed with their end walls to the endless chains at predetermined equal distances by way of pairs of supporting arms attached to chain bolts on the endless chains;
- the supporting arms may be pivotally coupled to each other and moveably connected with the guiding mechanism.
- each of the battery blocks held within its respective battery dock may be secured in the battery dock via at least one latch mechanism located on the exterior of the battery dock, wherein the at least one latch mechanism may be controlled by the control unit.
- the guiding mechanism may comprise of at least one stationary guide rail configured to guide each battery dock so as its opening downward enables the service module to lift and place a depleted battery block or receive a charged battery block from the battery dock;
- the guiding mechanism may comprise of two guide rails each located in proximity to the conveyor narrow sides, wherein the guide rails may laterally offset with respect to each other.
- each battery dock may have at least one guide member connected to at least one of its end walls and disposed for guided movement within said guide rail;
- the electrical connection between the charging unit and each of the docks may be provided by at least one cable;
- the at least one cable may be a traveling cable type;
- the at least one cable may be mounted within the circular conveyor or externally to the circular conveyor;
- the at least one cable may be looped around at least one support bar or at least one spool;
- the rotational movement of the conveyor may be limited to 180 degrees so as each battery dock can be moved to loading and unloading point;
- the charging unit may be further configured to communicate with the battery docks to provide to the control unit battery blocks status and diagnostic when the battery blocks are placed in the battery docks.

In various examples of the battery exchange station according to the present disclosure, one may possibly have recourse in addition to one and/or other of the following arrangements:
- the battery exchange station system may further comprise an enclosed housing with at least one access opening.
- the battery exchange station system may further comprise a ramp on which the electric vehicle can advance to the location of battery exchange in first direction X, a vehicle lane along which the battery service module that may move in a second direction Y substantially perpendicular to the first direction X, the service module may be located under the ramp, wherein the vehicle lane may have an opening adapted to give free passage to the battery block, the opening being in correspondence with the lift lane.

Further areas of applicability will become apparent from the description herein. The description and specific examples in the summary are intended for purposes of illustration only and are not intended to limit the scope of the present disclosure.

### BRIEF DESCRIPTION OF THE DRAWINGS

Other features and advantages of the disclosure appear from the following detailed description of some of its embodiments, given by way of non-limiting example, and with reference to the accompanying drawings, in which:
- FIG. 1 illustrates a perspective cross-sectional view of an exemplary arrangement of the battery storage and charge system.
- FIG. 2 illustrates a detailed perspective view an exemplary arrangement of the battery storage and charge system.
- FIG. 3 illustrates another perspective detail view of an exemplary arrangement of the battery storage and charge system.
- FIG. 4 illustrates a perspective detail view of an exemplary arrangement of the circular conveyor.
- FIG. 5 illustrates a side view of an exemplary arrangement of the circulating conveyor.
- FIG. 6 illustrates an exemplary side view of a battery dock.
- FIG. 7 illustrates a schematic block diagram of one example of the disclosed battery storage and charge system.
- FIG. 8 illustrates a schematic block diagram of another example of the disclosed battery storage and charge system.
- FIG. 9 illustrates a perspective view of an exemplary arrangement of the battery exchange station.

### DETAILED DESCRIPTION

The foregoing summary, as well as the following detailed description of certain examples will be better understood when read in conjunction with the appended drawings. As used herein, an element or step recited in the singular and proceeded with the word "a" or "an" should be understood as not excluding plural of the elements or steps, unless such exclusion is explicitly stated. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular property may include additional elements not having that property.

In the figures, the same references denote identical or similar elements, unless stated otherwise. In the drawings, the size of each element or a specific portion constituting the element is exaggerated, omitted, or schematically shown for convenience and clarity of description. Thus, the size of each component may not entirely reflect the actual size. In the case where it is judged that the detailed description of the related known functions or constructions may unnecessarily obscure the gist of the present disclosure, such explanation will be omitted.

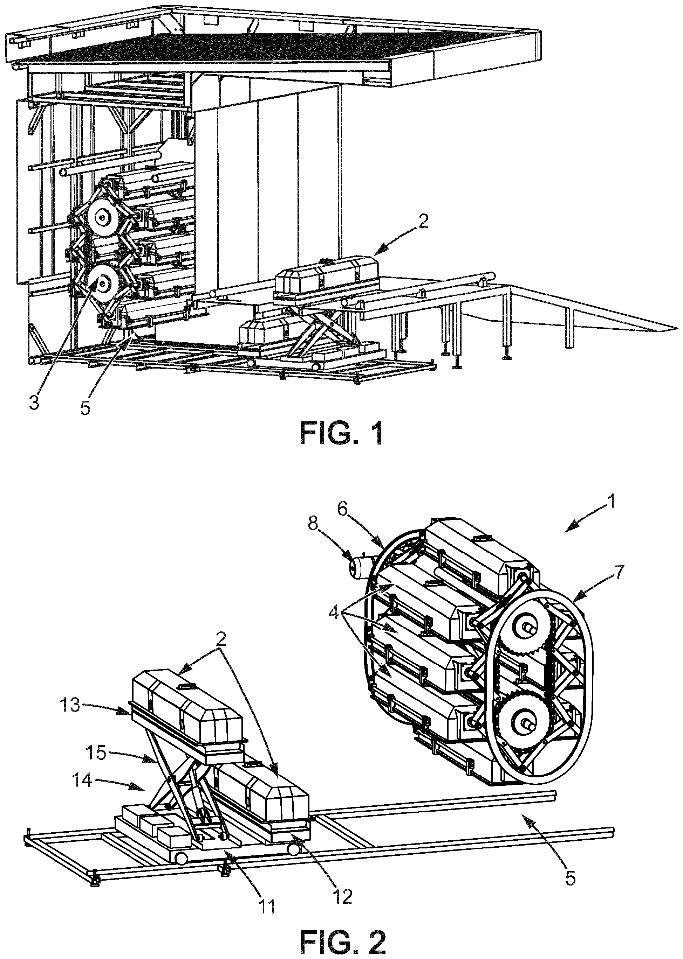

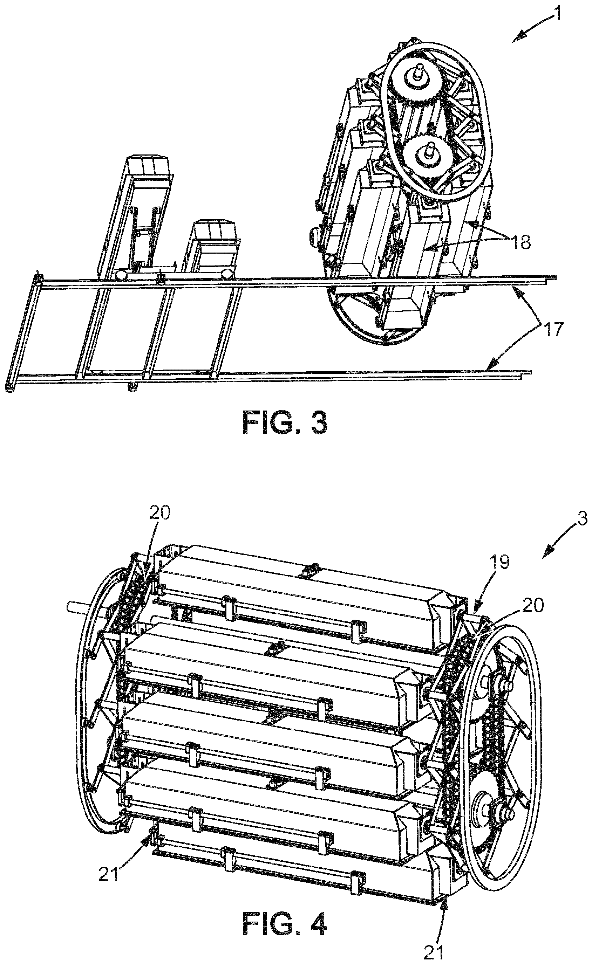

Referring to FIGURES 1 through 3, the battery storage and charge system 1 according to the first embodiment of the present disclosure may include a battery block 2 and a circulating conveyor 3 that may have a plurality of battery docks 4 arranged above one another the conveyor being adapted to circulate the battery docks vertically so as to pass a loading and unloading point within the housing 5 located beneath the conveyor. Each dock may be configured to receive and mechanically and electrically connect with a battery block 2. The electrical connection between the charging unit and each of the docks may be provided by at least one cable the at least one cable may be traveling type cable and may be located within the circular conveyor. The rotational movement of the conveyor may be limited to 180 or less degrees so as each battery dock can be moved to loading and unloading point. Such arrangement would limit fatigue damage possible caused to the cables by the excessive circular movement of the circulating conveyor 3. The cables may enable a connection between battery dock and the charging unit. The charging unit may be configured to communicate with the battery docks to provide a battery status and diagnostic of a battery when placed in battery dock to the control unit.

Furthermore, each dock of the plurality docks may have a downward opening 9 and may be configured to receive the battery block for electrical and mechanical connection by vertical fitting when such battery block is lifted in the loading and unloading point.

As can be seen on FIG. 2 the battery storage and charge system may comprise at least one rail 17 and a service module 11 mounted on the at least one rail. The service module may be controllably operable by the control unit to move on the at least one rail to the loading and unloading point 5 beneath the circulating conveyor 3 so as to selectively receive a charged battery block from a battery dock at the conveyor or selectively place a depleted battery block to an empty battery dock at the conveyor. The service module may include a position sensor 16 adapted to detect whether the battery block is properly positioned relative to the empty battery dock. The service module may further comprise a first platform 12 for supporting a charged battery block and a second platform 13 for supporting a discharged battery block. The arrangement may be also such that a first platform 12 may be for supporting a charged battery block and a second platform 13 for supporting a discharged battery block. The first platform and/or the second platform each may include a lift assembly 14 for raising and lowering the platform. The lift assembly may comprise a scissor type lift 15.

The circulating conveyor 3 as depicted on FIG 2, 4 and 5 may be adapted to be driven by two vertically disposed endless chains or belts 20 having the battery docks 4 located in between, the battery docks may be affixed with their end walls 21 to the endless chains at predetermined equal distances by way of pairs of supporting arms 22, 23 attached to chain bolts 19 on said endless chains 20. The pair of arms can be pivotally coupled to each other and may be moveably connected with the guiding mechanism. That way the arms can be utilized to connect the battery docks with the driving chain and guiding mechanism.

The guiding mechanism may comprise of at least one stationary guide rail 6, 7 configured to guide each battery dock so as its opening downward enables the service module 11 to lift and place a depleted battery block or receive a charged battery block from the battery dock. The guiding mechanism may comprise of two guide rails 6,7 each located in proximity to the conveyor narrow sides. The guide rails may be laterally offset with respect to each other. Each of the guide rails may be located on one side of the circular conveyor. Each battery dock may have at least one guide member connected to at least one of its end walls and disposed for guided movement within the guide rail. The electrical connection between the charging unit and each of the docks is provided by at least one cable.

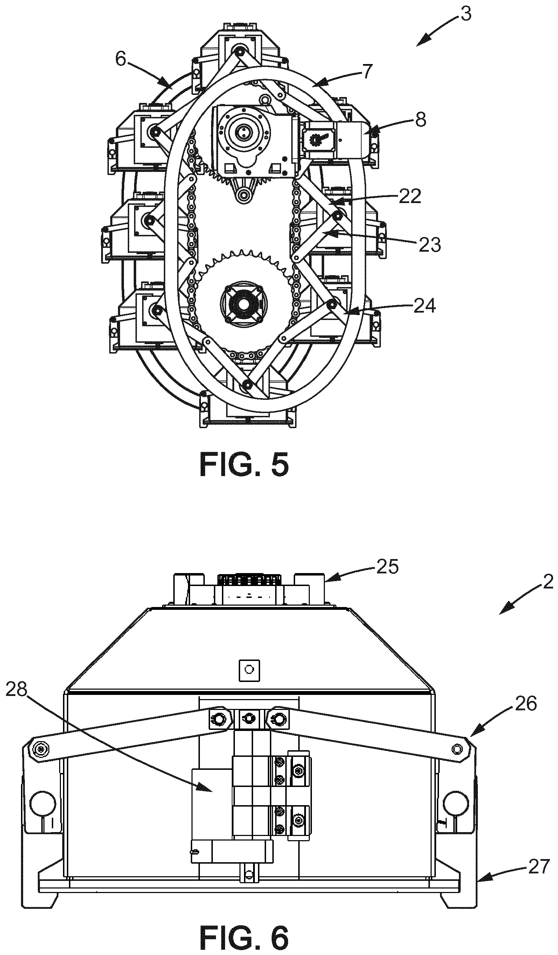

Referring to FIG. 6, each of the battery blocks held within their respective battery block is secured in the dock via at least one latch mechanism 27 that may be located either on the exterior or interior of the battery dock. The at least one latch mechanism may comprise a linkage 24 connecting the at least one latch with an electrometrical control element 28 configured to control the at least one latch. The electrometrical control element may control the at least one latch release or capture of the battery block within the battery dock and may comprise a solenoid, servo or a linear actuator. The element may be controlled by the control unit.

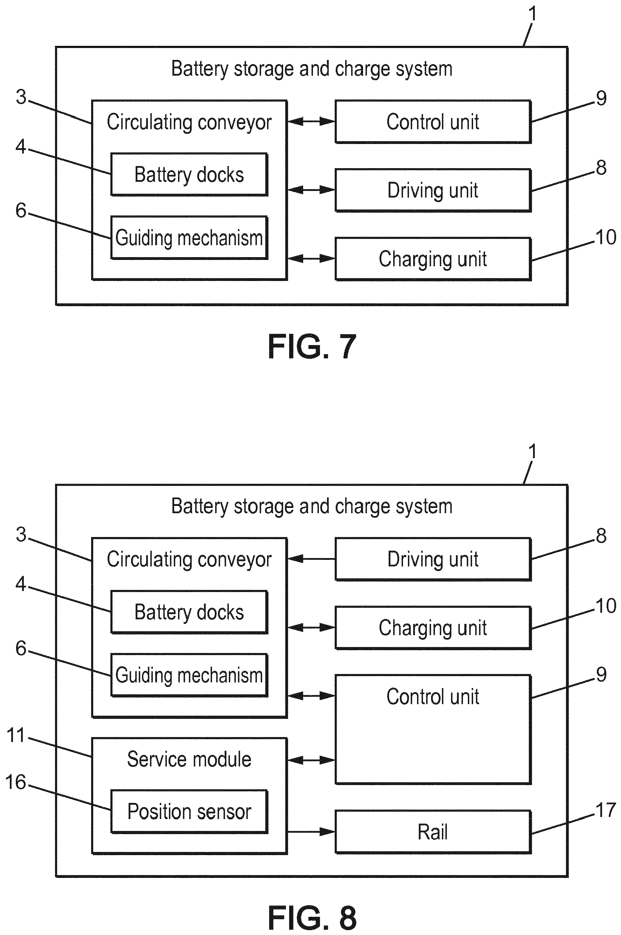

Referring to FIGURE 7 and 8, the circulating conveyor may be controlled by a control unit 9 and driven by a driving unit 8. The control unit may ensure at least one of following: communication with each of the battery docks, control of the battery block within a dock latch release and engagement, diagnostic of each battery block within the battery dock, communication with each of the battery block within its respective battery block, location of each battery block and/or dock, control of the conveyor as to its movement and its diagnostic, control movement of the service module and control positioning of each of the platform lifts. The position sensor 16 then may be used to correctly position respective service module platform against in the loading and unloading point 5. The driving unit then may drive the conveyor and/or service module and/or each of the service module platform lifts. The charging unit 10 then may be utilized to charge at least one of the battery blocks within the battery docks.

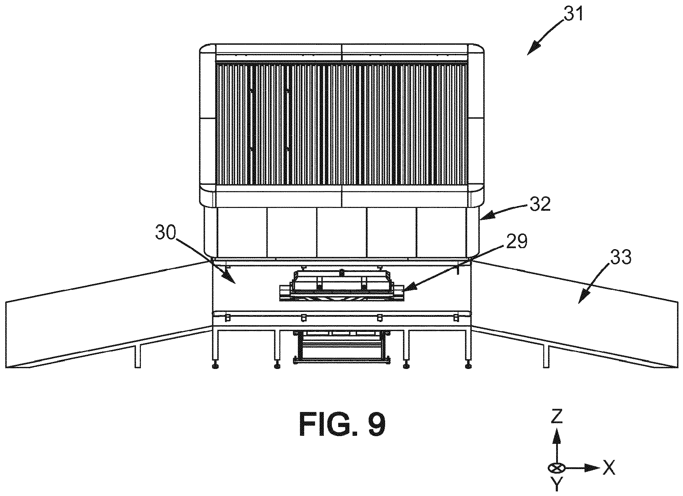

Referring to FIGURE 9, the battery exchange station 31 may comprise the battery storage and charge system as described in variety of examples above, the station further comprising an enclosed housing 32 with at least one access opening. The station may further comprises a ramp 33 on which an electric vehicle can advance to the location of battery exchange in first direction X. The station may further comprises a vehicle lane 30 along which the battery service module moves in a second direction Y substantially perpendicular to the first direction X. The station may further comprise the service module that may be located under the ramp. The vehicle lane may have an opening 29 adapted to give free passage to the battery block, the opening being in correspondence with the lift lane.

## Claims

1. A battery storage and charge system (1) for battery blocks (2), comprising:
- a circulating conveyor (3) having a plurality of battery docks (4), the conveyor being adapted to circulate the battery docks vertically so as to pass a loading and unloading point (5) located beneath the conveyor, wherein each battery dock is configured to receive a battery block (2) and to mechanically and electrically connect with the battery block;
- a guiding mechanism (6,7) configured to guide each battery dock so that each dock is positioned in a predetermined way to receive or deliver the battery block when passing the loading and unloading point;
- a driving unit (8) and a control unit (9) configured to drive and control the circulating conveyor;
- at least one charging unit (10) adapted to charge and communicate with the battery block when the block is installed in the battery dock.

2. A system according to claim 1, wherein the charging unit is external to the battery docks and the system includes an electrical connection system between the charging unit and each of the docks.

3. A system according to claim 1 or 2, wherein each battery dock of the plurality battery docks has a downward opening (18) and each battery dock is configured to receive the battery block for electrical and mechanical connection by vertical fitting when such battery block is lifted in the loading and unloading point.

4. A system according to claims 1 or 2, wherein the system further comprises at least one rail (17) and a service module (11) mounted on the at least one rail, wherein the service module is controllably operable by the control unit to move on the at least one rail to the loading and unloading point beneath the circular conveyor so as to selectively receive a charged battery block from a battery dock at the circular conveyor or selectively place a depleted battery block to an empty battery dock at the circular conveyor.

5. A system according to claim 4, wherein the service module includes a position sensor (16) adapted to detect whether the battery block is properly positioned relative to the empty battery dock.

6. A system according to claim 4 or 5, wherein the service module includes:
- a first platform (12) for supporting a charged battery block,
- a second platform (13) for supporting a discharged battery block.

7. A system according to claim 6, wherein the first platform and the second platform each includes a lift assembly (14) for raising and lowering the platform.

8. A system according to claim 7, wherein the lift assembly comprising a scissor type lift (15).

9. A system according to any of claims 1-8, wherein the circulating conveyor has two vertically disposed endless chains (20) having the battery docks located in between, wherein the battery docks are affixed with their end walls (21) to the endless chains at predetermined equal distances by way of pairs (22,23) of supporting arms attached to chain bolts (19) of the endless chains.

10. A system according to claim 9, wherein the supporting arms are pivotally coupled to each other and moveably connected with the guiding mechanism.

11. A system according to any of claims 1-10, wherein each of the battery blocks held within their respective battery dock is secured in the battery dock via at least one latch mechanism (27) located on the exterior of the battery dock, wherein the at least one latch mechanism is controlled by the control unit.

12. A system according to any of claims 1-11, wherein the guiding mechanism comprises of at least one stationary guide rail (6,7) configured to guide each battery dock so as its opening downward enables the service module to lift and place a depleted battery block or receive a charged battery block from the battery dock.

13. A system according to claim 12, wherein the guiding mechanism comprises of two guide rails (6,7) each located in proximity to the conveyor narrow sides, wherein the guide rails are laterally offset with respect to each other.

14. A system according to any of claims 12 or 13, wherein each battery dock has at least one guide member connected to at least one of its end walls and disposed for guided movement within the guide rail.

15. A system according to any of claims 1-14, wherein the charging unit is further configured to communicate with the battery docks to provide to the control unit battery blocks status and diagnostic when the battery blocks are placed in the battery docks.

16. A battery exchange station (31) comprising the battery storage and charge system according to any preceding claims, the station further comprising:
- an enclosed housing (32) with at least one access opening.

17. A battery exchange station according to claim 16 system further comprising:
- a ramp (33) on which the electric vehicle can advance to the location of battery exchange in first direction (X) ;
- a vehicle lane (30) along which the battery service module moves in a second direction (Y) substantially perpendicular to the first direction (X), the service module being located under the ramp, wherein the vehicle lane has an opening (29) adapted to give free passage to the battery block, the opening being in correspondence with the lift lane.
